# EUROPÄISCHE PATENTSCHRIFT

(11) **EP 4 098 155 B1**
(45) Veröffentlichungstag und Bekanntmachung des Hinweises auf die Patenterteilung: **25.09.2024**
(21) Anmeldenummer: 22176210.7
(22) Anmeldetag: 30.05.2022
(51) Int. Cl.: A47J 19/02, A47J 19/06

(54) **ENTSAFTEREINSATZ FÜR EIN ZUBEREITUNGSGEFÄSS SOWIE KÜCHENMASCHINE MIT ENTSAFTEREINSATZ**
JUICER INSERT FOR A PREPARATION VESSEL AND FOOD PROCESSOR WITH A JUICER INSERT
INSERT D'EXTRACTION DE JUS POUR UN RÉCIPIENT DE PRÉPARATION, AINSI QUE ROBOT DE CUISINE POURVU D'INSERT D'EXTRACTION DE JUS

(30) Priorität: 31.05.2021 DE 102021114057
(43) Veröffentlichungstag der Anmeldung: 07.12.2022
(73) Patentinhaber: Vorwerk & Co. Interholding GmbH, 42270 Wuppertal (DE)
(72) Erfinder: LENKEIT, Nadine, 42349 Wuppertal (DE)
(74) Vertreter: Dr. Solf & Zapf Patent- und Rechtsanwalts PartG mbB

(56) Entgegenhaltungen:
- AT-A4- 520 201
- AT-B1- 520 201
- CN-A- 105 496 170
- DE-A1- 10 336 825
- DE-A1- 102009 006 672
- DE-U1- 202020 106 270
- DE-U1- 202021 105 191
- DE-U1- 202021 105 580

## Beschreibung

Die Erfindung betrifft ein Zubereitungsgefäß, das mindestens einen rotierbaren Werkzeughalter aufweist, mit einem Entsaftereinsatz zum Einsetzen in das Zubereitungsgefäß.

Gesunde Ernährung ist für viele Menschen ein zentraler Bestandteil im Tagesablauf. Zur Herstellung von Säften und Smoothies sind im Stand der Technik eine Vielzahl von Hilfsmitteln bekannt, mit denen Lebensmittel, insbesondere Obst und Gemüse, entsaftet werden können. Dazu werden üblicherweise handbetriebene Werkzeuge, wie z. B. Entsaftungskegel für Zitrusfrüchte oder manuelle Reiben, z. B. für Äpfel oder Gemüse, verwendet. Ferner sind eine Vielzahl elektrisch betriebener Entsaftungsgeräte bekannt, die das zu entsaftende Lebensmittel zerkleinern oder zerquetschen und die gewonnene Flüssigkeit im Wesentlichen von den festen Bestandteilen des Lebensmittels trennen.

DE 103 36 825 A1 offenbart ein elektrisches Haushaltsgerät mit einem Zubereitungsgefäß, in das ein Entsaftereinsatz einsetzbar ist. Das Zubereitungsgefäß weist eine rohrförmige Behälterhülse auf, die sich bis zur oberen Öffnung des Zubereitungsgefäßes erstreckt. Auf die Behälterhülse ist das Entsafterwerkzeug aufsetzbar.

CN 105496170 A offenbart eine Entsaftungsmaschine, die nur zum Zweck des Entsaftens ausgebildet ist. Die Entsaftungsmaschine weist eine Basis und einen auf die Basis aufsetzbaren Auffangtopf für Saft auf. Der Auffangtopf weist einen seitlichen Saftauslass auf.

AT 520201 A4 offenbart ein Verfahren zur Steuerung einer Küchenmaschine. Die Küchenmaschine weist einen Mixtopf mit Deckel und Einfüllöffnung auf. In den Deckel ist die Einfüllöffnung durchtretend ein Zitrusfrüchtepresskopf eingesetzt.

DE 10 2009 006 672 A1 offenbart eine elektromotorisch betriebene Küchenmaschine mit einem Rührtopf, in dem ein Werkzeug mit einem Antriebs-schaft angeordnet ist. Der Antriebsschaft wirkt mit einem Werkzeughalter des Rührtopfes zusammen. Ein als Zitruspresse ausgebildeter Entsaftereinsatz durchtritt einen Deckel des Rührtopfes durch eine Einfüllöffnung, so dass der Entsaftereinsatz oben aus dem Deckel herausragt.

DE 20 2021 105 580 U1 offenbart eine Küchenmaschine mit einer Antriebseinheit und einem Topf. In den Topf ist eine Verbindungswelle einbringbar, die mit dem Werkzeughalter des Topfes zusammenwirken kann. An einer Endseite der Verbindungswelle ist ein Werkzeug verbindbar, das in eine Einfüllöffnung eines Deckels des Zubereitungsgefäßes eingesetzt ist und zumindest teilweise auf der Oberseite des Deckels aufliegt.

DE 20 2021 105 191 U1 offenbart eine Küchenmaschine mit einem Mixtopf, in den ein Stab einsetzbar ist, der mit einem Werkzeughalter des Mixtopfes zusammenwirkt. Der Stab ist ferner mit einem Auspresswerkzeug verbindbar, das auf einen Deckel des Mixtopfes aufsetzbar ist und dessen Einfüllöffnung zumindest teilweise durchtritt.

DE 20 2020 106 270 U1 offenbart eine Saftpresse mit einem Mixtopf und einer in den Mixtopf hineinragenden, durch einen Antrieb um eine Drehachse antreibbaren Welle. Der Mixtopf weist einen Rand auf, wobei den Rand ein auf den Mixtopf aufgesetztes einstückiges Deckelsieb berührt. Weiter umfasst die Saftpresse einen die antreibbare Welle entlang der Drehachse verlängernden Stab mit einem drehfest auf die Welle aufsetzbaren ersten Stabende und mit einem durch eine Öffnung in dem einstückigen Deckelsieb steckbaren zweiten Stabende, und einen drehfest auf das zweite Stabende steckbaren Auspresskegel.

Die aus dem Stand der Technik bekannten Hilfsmittel oder Geräte weisen allerdings den Nachteil auf, dass entweder ein enormer Kraft- und Zeitaufwand seitens des Verwenders aufgebracht werden muss, oder - im Fall von elektrischen Entsaftern - stets ein nur zum Zweck des Entsaftens verwendbares Gerät gelagert werden muss.

Der vorliegenden Erfindung liegt daher die Aufgabe zu Grunde, ein Hilfsmittel zum Entsaften von Lebensmitteln anzugeben, bei dessen Handhabung der Kraftaufwand für den Verwender reduziert ist und gleichzeitig auf ein zusätzliches Gerät verzichtet werden kann.

Die vorgenannte Aufgabe ist gelöst mit einem Zubereitungsgefäß gemäß Anspruch 1.

In einer Vielzahl von Haushalten sind bereits Küchengeräte im Einsatz, die ein Zubereitungsgefäß mit mindestens einem rotierbaren Werkzeughalter aufweisen. Beispielsweise handelt es sich dabei um Küchengeräte, die zum Zubereiten von Speisen ausgebildet sind. Das Zubereitungsgefäß weist ein Volumen auf, in das die zubereiteten Speisen eingebracht werden. Am Boden des Zubereitungsgefäßes ist üblicherweise der rotierbare Werkzeughalter bzw. das an dem rotierbaren Werkzeughalter befestigte Werkzeug angeordnet. Der Werkzeughalter ist im in das Küchengerät eingesetzten Zustand des Zubereitungsgefäßes von einem Motor des Küchengeräts, insbesondere mit variablen Drehzahlen, rotierend antreibbar.

Der Werkzeughalter weist beispielsweise eine das Zubereitungsgefäß durchtretende Welle auf. Insbesondere ist die Welle außerhalb des Zubereitungsgefäßes zumindest mittelbar, vorzugsweise formschlüssig, mit einem Motor eines Küchengeräts koppelbar. Es ist vorteilhaft vorgesehen, dass ein Werkzeug fest oder lösbar mit dem Werkzeughalter bzw. der Welle verbunden ist. Alternativ dazu ist auch vorgesehen, dass der Werkzeughalter rotierbar magnetisch mit einem Motor koppelbar ist.

Das Zubereitungsgefäß ist beispielsweise mit einem an dem Werkzeughalter befestigten Werkzeug zum Rühren und/oder Zerkleinern von Lebensmitteln ausgebildet.

Erfindungsgemäß ist vorgesehen, dass das Zubereitungsgefäß mindestens eine Heizeinrichtung aufweist, mit der in das Zubereitungsgefäß einbringbare Lebensmittel aufheizbar sind. Das Zubereitungsgefäß weist dazu mindestens eine elektrische Schnittstelle zum Küchengerät auf. Ein derartiges Küchengerät mit Zubereitungsgefäß wird von der Patentanmelderin beispielsweise unter der Marke Thermomix^{®} vertrieben.

Es ist insbesondere auch vorgesehen, dass das Zubereitungsgefäß mindestens eine Kühleinrichtung aufweist. Vorzugsweise weist die Kühleinrichtung mindestens ein Peltier-Element auf.

Der Entsaftereinsatz weist mindestens ein Adapterelement und mindestens ein Entsafterwerkzeug auf. Der Entsaftereinsatz ist derart ausgebildet, dass er vollständig in das Zubereitungsgefäß, insbesondere in das für Lebensmittel vorgesehene Volumen, einbringbar ist. Das Adapterelement des Entsaftereinsatzes ist derart eingerichtet und ausgebildet, dass es zum Übertragen eines Drehmoments zumindest mittelbar mit dem Werkzeughalter koppelbar ist. Das Adapterelement kann folglich zumindest mit dem in dem Zubereitungsgefäß vorhandenen rotierbaren Werkzeughalter zumindest mittelbar gekoppelt werden, so dass bei einer Rotation des Werkzeughalters auch das Adapterelement rotiert.

Der Entsaftereinsatz ist vorzugsweise derart in das Zubereitungsgefäß, insbesondere in das für Lebensmittel vorgesehene Volumen, einbringbar, dass das Zubereitungsgefäß mit einem Deckel verschließbar ist. Der Deckel liegt dazu vorzugsweise zumindest teilweise an einer Innenwand des Zubereitungsgefäßes an. Der Entsaftereinsatz ist insbesondere durch eine Ausnehmung im Deckel zugänglich, vorzugsweise so, dass durch die Ausnehmung zu entsaftende Lebensmittel einbringbar sind. Beispielsweise ist durch die Ausnehmung ein Presswerkzeug hindurchführbar. Insbesondere ist das Zubereitungsgefäß für Dampfgarvorgänge druckfest ausgebildet. Vorzugsweise ist das Zubereitungsgefäß mit dem Deckel druckfest verschließbar. Insbesondere ist das Zubereitungsgefäß, vorzugsweise zumindest die das Speisen aufnehmende Volumen umschließende Innenwand, einstückig ausgebildet.

Das Adapterelement ist drehfest mit dem Entsafterwerkzeug verbunden, so dass eine Rotation des Adapterelements eine Rotation des Entsafterwerkzeugs verursacht. Beispielsweise ist zwischen dem Adapterelement und dem Entsafterwerkzeug ein Verbindungsschaft, insbesondere ein starrer Verbindungsschaft, angeordnet.

Insbesondere ist vorgesehen, dass an dem Werkzeughalter des Zubereitungsgefäßes ein Werkzeug angeordnet ist. Beispielsweise ist das Werkzeug demontierbar befestigt, so dass es austauschbar ist, oder es ist nicht-austauschbar mit dem Werkzeughalter verbunden. Es ist auch vorgesehen, dass das Adapterelement zum Übertragen eines Drehmoments zumindest mittelbar oder unmittelbar mit dem Werkzeug koppelbar ausgebildet ist, so dass das Adapterelement derart an dem im Zubereitungsgefäß vorhandenen Werkzeug angreift, dass eine Rotation des Werkzeugs auf das Adapterelement und damit auf den Entsaftereinsatz übertragen wird. Es ist vorgesehen, dass das Adapterelement zum Übertragen eines Drehmoments nur mit dem Werkzeughalter oder nur mit dem Werkzeug oder mit dem Werkzeug und dem Werkzeughalter zusammenwirkt.

Das Adapterelement und/oder der Verbindungsschaft und/oder das Entsafterwerkzeug sind beispielsweise aus einem Kunststoff oder einem Metall, insbesondere einem rostfreien Stahl, hergestellt. Die Reinigung wird insbesondere dadurch vereinfacht, dass das Adapterelement, der Verbindungsschaft und das Entsafterwerkzeug voneinander demontierbar sind, insbesondere werkzeugfrei demontierbar sind. Insbesondere ist zumindest das Entsafterwerkzeug austauschbar montiert. Es ist auch vorgesehen, dass das Adapterelement, der Verbindungsschaft und das Entsafterwerkzeug nicht-demontierbar miteinander verbunden sind.

Die Erfindung hat gegenüber dem Stand der Technik den Vorteil, dass der Kraftaufwand zum Entsaften von Lebensmitteln für den Benutzer reduziert ist, da der Entsaftereinsatz über den rotierbaren Werkzeughalter des Zubereitungsgefäßes antreibbar ist. Zudem ist kein zusätzliches Gerät zum Entsaften erforderlich und der Entsaftereinsatz kann bei bereits vorhandenen Küchengeräten zum Einsetzen in ein Zubereitungsgefäß nachgerüstet werden.

Insbesondere bei Lebensmitteln, die zum Entsaften zerkleinert werden müssen, hat es sich gemäß einer Ausgestaltung des Zubereitungsgefäßes als besonders vorteilhaft herausgestellt, wenn vorgesehen ist, dass mindestens eine erste Trennvorrichtung vorhanden ist, und dass mit der ersten Trennvorrichtung der Saft des zerkleinerten Lebensmittels, z.B. Karotten, Fenchel oder Äpfel, von festen Bestandteilen separierbar ist. Die Trennvorrichtung ist beispielsweise als Sieb, Netz oder Gitter ausgebildet und dient dazu, die festen Bestandteile bis zu einer bestimmten Größe von dem Saft des Lebensmittels zu trennen. Die Trennvorrichtung ist vorzugsweise derart angeordnet, dass eine Trennung von festen Bestandteilen bis zu einer bestimmten Größenordnung und Saft erfolgen kann, beispielsweise unterhalb des Entsafterwerkzeugs. Beispielsweise wird der Saft am Boden des Zubereitungsgefäßes gesammelt.

Es ist vorgesehen, dass sich die erste Trennvorrichtung im Wesentlichen in einer Ebene in Richtung einer Innenwand des Zubereitungsgefäßes erstreckt. Die erste Trennvorrichtung ist beispielsweise scheibenförmig ausgebildet.

Das Entsafterwerkzeug rotiert während des Betriebs, so dass es sich als vorteilhaft herausgestellt hat, wenn die erste Trennvorrichtung das Entsafterwerkzeug zumindest teilweise, insbesondere vollständig, umgibt. Die erste Trennvorrichtung ist vorzugsweise derart gehalten, dass sie gemeinsam mit dem Entsafterwerkzeug rotiert. Die erste Trennvorrichtung ist beispielsweise topf- oder kegelförmig ausgebildet, so dass sich die Trennvorrichtung ausgehend von dem Entsafterwerkzeug nach oben erstreckt. Vorzugsweise erstreckt sich die erste Trennvorrichtung zumindest abschnittsweise, insbesondere vollständig, in einer Ebene mit dem Entsafterwerkzeug. Durch die Zentrifugalkräfte werden die Bestandteile der von dem Entsafterwerkzeug zerkleinerten Lebensmittel nach außen gegen die Trennvorrichtung transportiert, wobei ein Trennen zwischen Saft und festen Bestandteilen bis zu einer bestimmten Größenordnung erfolgt. Vorzugsweise ist die erste Trennvorrichtung zumindest abschnittsweise im Wesentlichen orthogonal zu einer Arbeitsebene des Entsafterwerkzeugs angeordnet, so dass Zentrifugalkräfte auf vorteilhafte Weise zum Trennen wirken können.

Vorzugsweise um zu verhindern, dass sich die von dem Saft separierten festen Bestandteile des Lebensmittels unbeabsichtigt wieder mit dem Saft mischen, ist gemäß einer weiteren Ausgestaltung des Zubereitungsgefäßesvorgesehen, dass die Trennvorrichtung mindestens eine zumindest teilweise, insbesondere vollständig, umfänglich umlaufende Dichtung aufweist. Die Dichtung verhindert, dass die festen Bestandteile des Lebensmittels durch die Rotation über den Rand der Trennvorrichtung wandern und sich wieder mit dem Saft im Zubereitungsgefäß bzw. am Boden des Zubereitungsgefäßes mischen. Die Dichtung weist vorzugsweise eine Neigung gegenüber einer Rotationsachse des Entsafterwerkzeugs auf. Die Dichtung ist vorzugsweise flexibel ausgebildet, insbesondere um unterschiedlich breite Spalte bei verschiedenen Zubereitungsgefäßen auszugleichen. Die Dichtung ist insbesondere aus einem Material ausgebildet, das einen geringen Reibungskoeffizienten aufweist, beispielsweise Polytetrafluorethylen (PTFE), insbesondere dann, wenn die Dichtung zusammen mit dem Entsafterwerkzeug an einer Innenwand des Zubereitungsgefäßes entlang rotiert. Es ist auch vorgesehen, dass die Dichtung aus einem anderen Material hergestellt ist und eine Beschichtung aus Polytetrafluorethylen (PTFE) aufweist.

Es ist vorzugsweise vorgesehen, dass die erste Trennvorrichtung derart ausgebildet ist, dass sie im in das Zubereitungsgefäß eingebrachten Zustand an einer Innenwand des Zubereitungsgefäßes anliegt, insbesondere mit einer Dichtung an der Innenwand des Zubereitungsgefäßes anliegt. Alternativ dazu ist vorgesehen, dass die erste Trennvorrichtung derart ausgebildet ist, dass sie im in das Zubereitungsgefäß eingebrachten Zustand beabstandet zu einer Innenwand des Zubereitungsgefäßes angeordnet ist.

Eine weitere Ausgestaltung des Zubereitungsgefäßes sieht vor, dass mindestens eine zweite Trennvorrichtung vorhanden ist. Die zweite Trennvorrichtung weist vorzugsweise größere Trennöffnungen auf als die erste Trennvorrichtung. Beispielsweise ist die zweite Trennvorrichtung als ein Sieb mit einer größeren Maschenweite als die erste Trennvorrichtung ausgebildet. Es ist auch vorgesehen, dass die zweite Trennvorrichtung Löcher und Schlitze als Trennöffnungen aufweist. Beispielsweise ist die zweite Trennvorrichtung topf- oder kegelförmig ausgebildet. Es ist auch vorgesehen, dass sich die zweite Trennvorrichtung im Wesentlichen in einer Ebene in Richtung einer Innenwand des Zubereitungsgefäßes erstreckt. Die zweite Trennvorrichtung ist beispielsweise scheibenförmig ausgebildet.

Vorteilhaft ist die zweite Trennvorrichtung entlang einer Rotationsachse des Entsafterwerkzeugs beabstandet zu der ersten Trennvorrichtung gehalten. Insbesondere sind die erste Trennvorrichtung und die zweite Trennvorrichtung unterhalb des Entsafterwerkzeugs angeordnet, insbesondere zwischen dem Entsafterwerkzeug und dem Adapterelement. Vorzugsweise ist die erste Trennvorrichtung zumindest abschnittsweise in einer Ebene mit dem Entsafterwerkzeug angeordnet.

Die zweite Trennvorrichtung ist folglich näher zu dem Adapterelement angeordnet als die erste Trennvorrichtung. Sowohl die erste Trennvorrichtung als auch die zweite Trennvorrichtung sind vorzugsweise topfförmig ausgebildet, wobei insbesondere vorgesehen ist, dass sich die erste Trennvorrichtung bis zu einer ersten Höhe erstreckt und dass die zweite Trennvorrichtung so ausgebildet ist, dass sie sich ebenfalls bis zu der ersten Höhe erstreckt. Insbesondere umgibt die zweite Trennvorrichtung die erste Trennvorrichtung teilweise oder vollständig. Bei dieser Anordnung der Trennvorrichtungen kann auf eine Dichtung verzichtet werden.

Es ist insbesondere vorgesehen, dass die zweite Trennvorrichtung derart ausgebildet ist, dass sie im in das Zubereitungsgefäß eingebrachten Zustand an einer Innenwand des Zubereitungsgefäßes anliegt, vorzugsweise mit einer Dichtung an der Innenwand anliegt. Alternativ dazu ist auch vorgesehen, dass die zweite Trennvorrichtung im in das Zubereitungsgefäß eingebrachten Zustand beabstandet zur einer Innenwand des Zubereitungsgefäßes angeordnet ist.

Die zweite Trennvorrichtung ist beispielsweise drehbar an dem Entsaftereinsatz gelagert, so dass die zweite Trennvorrichtung fest in das Zubereitungsgefäß einsetzbar ist. Die zweite Trennvorrichtung dient dabei zusätzlich als Lagerung des Entsaftereinsatzes gegenüber dem Zubereitungsgefäß. Die erste Trennvorrichtung ist drehfest mit dem Entsafterwerkzeug, insbesondere mit dem Adapterelement und/oder dem Entsafterwerkzeug ausgebildet. Werden nun feste Bestandteile durch die Rotation über die erste Trennvorrichtung hinaus nach außen getragen, werden diese Bestandteile von der zweiten Trennvorrichtung aufgefangen. Der Saft wird wieder am Boden des Zubereitungsgefäßes gesammelt.

Insbesondere bei Ausführungsbeispielen, bei denen keine zweite Trennvorrichtung vorgesehen ist, hat sich als besonders vorteilhaft herausgestellt, wenn vorgesehen ist, dass das Adapterelement und das Entsafterwerkzeug mit einem Verbindungsschaft miteinander verbunden sind, insbesondere dass an dem Verbindungsschaft ein Positionierungsmittel zum Abstützen an einer Wand des Zubereitungsgefäßes angeordnet ist. Das Positionierungsmittel ist beispielsweise drehbar auf dem Verbindungsschaft gelagert und stützt sich beispielsweise, insbesondere mit einer Dichtung, gegenüber der Wand des Zubereitungsgefäßes ab. Das Entsafterwerkzeug wird durch das Positionierungsmittel zentral innerhalb des Zubereitungsgefäßes gehalten. Vorzugsweise weist das Positionierungsmittel zumindest Ausnehmungen auf, um den Saft zum Boden des Zubereitungsgefäßes durchtreten zu lassen.

Der Verbindungsschaft verbindet das Adapterelement und das Entsafterwerkzeug, insbesondere so, dass ein Drehmoment übertragbar ist. Alternativ dazu ist auch vorgesehen, dass das Adapterelement und das Entsafterwerkzeug unmittelbar miteinander verbunden sind. Ein Drehmoment wird dabei direkt übertragen, ein Verbindungsschaft ist dann entbehrlich.

Es ist auch vorgesehen, dass das Adapterelement zumindest teilweise oder vollständig in dem Entsafterwerkzeug angeordnet ist. Beispielsweise ist vorgesehen, dass das Adapterelement zumindest teilweise in einem Entsafterkegel, insbesondere zum Entsaften von Zitrusfrüchten, angeordnet ist.

Als besonders vorteilhaft hat sich gemäß einer weiteren Ausgestaltung des Zubereitungsgefäßes herausgestellt, wenn vorgesehen ist, dass das Entsafterwerkzeug austauschbar montiert ist, insbesondere werkzeugfrei austauschbar montiert ist. Ein Entsaftereinsatz weist beispielsweise eine Mehrzahl zugeordneter Entsafterwerkzeuge auf - ein Set von Entsafterwerkzeugen -, die jeweils beispielsweise für unterschiedliche Gemüse- oder Fruchtsorten vorgesehen sind. So sind beispielsweise unterschiedliche Entsafterwerkzeuge für Tomaten, Zitronen, Möhren, Fenchel und andere Lebensmittel vorgesehen. Das Entsafterwerkzeug ist beispielsweise mit der Trennvorrichtung oder dem Verbindungsschaft verschraubt. Es ist auch vorgesehen, dass das Entsafterwerkzeug mittels Klemmen, Schrauben oder Spannen befestigt ist.

Als besonders vorteilhaft hat sich gemäß einer Ausgestaltung herausgestellt, wenn das Entsafterwerkzeug Schneid- oder Reißwerkzeuge aufweist und/oder dass das Entsafterwerkzeug eine Konusinnenfläche oder eine konkave Innenfläche aufweist, und dass an oder in der Konusinnenfläche oder der konkaven Innenfläche Schneid- und/oder Reißwerkzeuge angeordnet sind. Ferner ist vorgesehen, dass das Entsafterwerkzeug als Entsafterkegel für Zitrusfrüchte ausgebildet ist.

Im Fall der Konusinnenfläche bzw. der konkaven Innenfläche können Lebensmittel auf einfache Weise in den Konus des Entsafterwerkzeugs bzw. die konkave Innenfläche eingepresst werden, so dass die Schneid- und/oder Reißwerkzeuge das Lebensmittel auf einfache Weise zerkleinern können, um den Saft zu extrahieren.

Eine weitere Ausgestaltung des Zubereitungsgefäßes sieht vor, dass das Adapterelement zum form- und/oder kraftschlüssigen Zusammenwirken mit einem Werkzeughalter oder einem an dem Werkzeughalter montierten Werkzeug ausgebildet ist. Vorzugsweise weist das Adapterelement einen hülsenförmigen Grundkörper auf, der eine Mehrzahl sich entlang einer Rotationsachse erstreckender Ausnehmungen aufweist. Die Ausnehmungen wirken im Montagezustand formschlüssig mit dem Werkzeug oder mit dem Werkzeughalter des Zubereitungsgefäßes zusammen. Beispielsweise ist das Werkzeug als Schneid- und Rührwerkzeug mit mindestens zwei, insbesondere mindestens vier, Flügeln ausgebildet. Das Adapterelement weist in seinem hülsenförmigen Grundkörper beispielsweise vier Ausnehmungen auf, so dass die Flügel des Schneidmessers übergriffen werden können. Insbesondere ist das Adapterelement so ausgebildet, dass es nicht an den Klingenabschnitten der Flügel anliegt, sondern an stumpfen Halteabschnitten. Dadurch werden die Klingenabschnitte nicht beschädigt.

Beispielsweise weist das Adapterelement in Kontaktbereichen zum Werkzeughalter oder zum Werkzeug des Zubereitungsgefäßes eine elastische Beschichtung auf, um den Werkzeughalter bzw. das Werkzeug nicht zu beschädigen und um einen verbesserten Formschluss herzustellen.

Insbesondere um eine vorteilhafte Integration in eine Küchengeräteumgebung zu gewährleisten, ist gemäß einer weiteren Ausgestaltung vorgesehen, dass der Entsaftereinsatz und/oder das Entsafterwerkzeug mindestens ein Identifikationsmittel zur Identifizierung durch ein Küchengerät aufweist. Der Entsaftereinsatz und/oder das Entsafterwerkzeug werden folglich beim Einsetzen in das Zubereitungsgefäß eines Küchengeräts von diesem erkannt, so dass beispielsweise ein Betriebsmodus für den Motor und damit für das im Zubereitungsgefäß angeordnete Werkzeug festgelegt wird. So kann beispielsweise die Drehzahl auf eine Maximaldrehzahl begrenzt werden oder bei bestimmten Entsafterwerkzeugen, die vorbestimmten Früchten und Gemüsen zugeordnet sind, eine auf das entsprechende Lebensmittel abgestimmte Drehzahl festgelegt werden. Das Identifikationsmittel ist beispielsweise zum Empfang und/oder Senden von Funksignalen, insbesondere von Nahbereichsfunksignalen, ausgebildet. Beispielsweise weist das Identifikationsmittel mindestens einen RFID-Chip oder ähnliches auf.

Gemäß einer Ausgestaltung des Zubereitungsgefäßes ist vorgesehen, dass mindestens ein Deckel und mindestens ein Presswerkzeug umfasst sind. Der Deckel verhindert, dass Saft und/oder feste Bestandteile von zerkleinerten Lebensmitteln aus dem Zubereitungsgefäß heraus gelangen. Das Presswerkzeug dient dazu, das zu zerkleinernde Lebensmittel auf das Entsafterwerkzeug zu pressen. Vorzugsweise weist der Deckel mindestens eine Ausnehmung auf. Das Presswerkzeug ist vorzugsweise so dimensioniert, dass es durch die Ausnehmung im Deckel in das Zubereitungsgefäß einbringbar ist, um eine Presskraft auf ein Lebensmittel im Zusammenwirken mit dem Entsafterwerkzeug aufzubringen.

Alternativ dazu ist vorgesehen, dass der Deckel einen zumindest teilweise schwenkbaren Abschnitt aufweist, und dass das Presswerkzeug zumindest teilweise an dem schwenkbaren Teil des Deckels angeordnet ist. Das Presswerkzeug dient dabei ebenfalls dem Aufbringen einer Presskraft auf ein Lebensmittel im Zusammenwirken mit dem Entsafterwerkzeug, allerdings wird es dadurch von dem Entsafterwerkzeug gelöst, dass ein Teil des Deckels hochgeklappt wird. Im aufgeklappten Zustand ist ein Lebensmittel einbringbar und der Deckel kann durch Herunterklappen eine Presskraft auf das Lebensmittel bewirken.

Die eingangs genannte Aufgabe ist ferner gelöst durch ein Küchengerät zur Zubereitung von Speisen, wie eingangs beschrieben. Das Küchengerät weist mindestens ein Zubereitungsgefäß wie vorstehend beschrieben sowie mindestens einen Entsaftereinsatz nach einem der vorstehenden Ausführungsbeispiele auf. Das Küchengerät ist gemäß einer ersten Ausgestaltung vorzugsweise so ausgebildet und eingerichtet, dass eine vorbestimmte Drehzahl, insbesondere eine maximale Drehzahl, eines Motors zum Antreiben der Werkzeughalterung in Abhängigkeit von der Art des verwendeten Entsafterwerkzeuges festlegbar ist. Das Küchengerät weist beispielsweise ein Steuergerät auf, mit dem die Drehzahl des Motors steuerbar ist. Die Festlegung der Drehzahl erfolgt entweder durch Auswahl durch den Benutzer über eine Eingabeschnittstelle oder automatisch, indem das Küchengerät den Entsaftereinsatz und/oder das Entsafterwerkzeug identifiziert, beispielsweise anhand eines Identifikationsmittels, insbesondere per Funk.

Ferner ist vorgesehen, dass die Drehzahl, insbesondere die maximale Drehzahl, in Abhängigkeit von Steueranweisungen eines auf dem Küchengerät, insbesondere dem Steuergerät des Küchengeräts, ablaufenden Zubereitungsprogramms festlegbar ist. Das Küchengerät ist beispielsweise mit einem Zubereitungsprogramm zur Zubereitung einer Speise anhand eines festgelegten Rezeptes steuerbar. Das Küchengerät informiert den Benutzer dabei über die nächsten durchzuführenden Schritte für die Zubereitung. Im vorliegenden Fall könnte der Benutzer dazu aufgefordert werden, den Entsaftereinsatz mit einem bestimmten Entsafterwerkzeug einzusetzen. Erkennt das Küchengerät das Einsetzen oder wird das Einsetzen vom Benutzer bestätigt, erfolgt ein Antreiben des Motors mit einer vorbestimmten Drehzahl, die von den Steueranweisungen des Zubereitungsprogramms in Abhängigkeit von dem Rezept festgelegt ist.

Die automatische Identifikation erfolgt beispielsweise über ein Identifikationsmittel, das an dem Entsafterwerkzeug und/oder an dem Entsaftereinsatz angeordnet ist, und von dem Küchengerät, insbesondere per Funk, ausgelesen wird.

Vorzugsweise weist das Küchengerät dazu mindestens ein Sende- und/oder Empfangsmittel für Funksignale eines Identifikationsmittels, insbesondere eines drahtlosen Identifikationsmittels, auf. Beispielsweise ist das Sende- und/oder Empfangsmittel für das Auslesen von für RFID-Chips bzw. RFID-Antennen ausgebildet.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Entsaftereinsatzes in einem Zubereitungsgefäß,
- Fig. 2: ein weiteres Ausführungsbeispiel eines Entsaftereinsatzes in einem Zubereitungsgefäß, und
- Fig. 3: ein weiteres Ausführungsbeispiel eines Entsaftereinsatzes in einem Zubereitungsgefäß.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

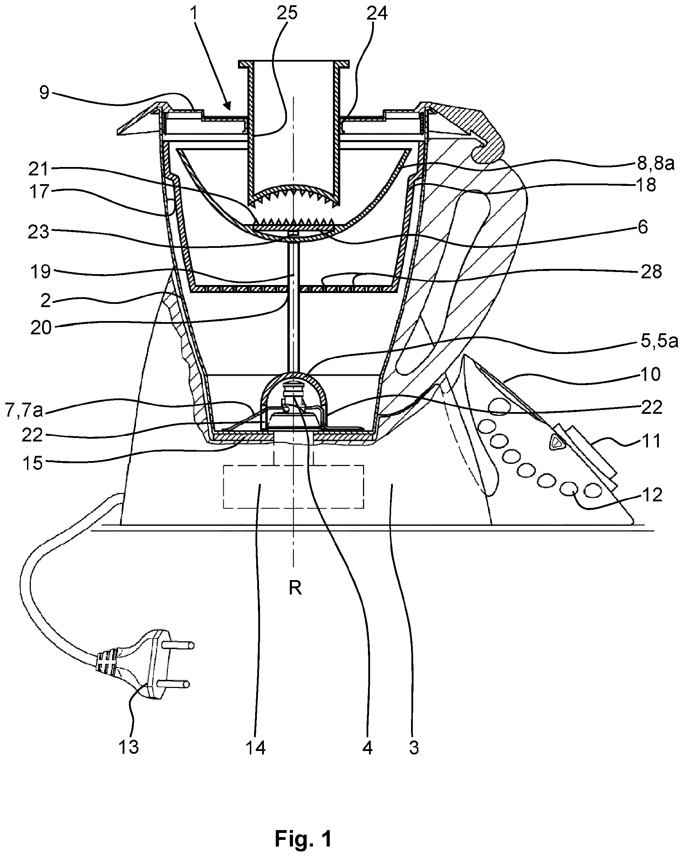

Fig. 1 zeigt ein Ausführungsbeispiel eines Entsaftereinsatzes 1, eingesetzt in ein Zubereitungsgefäß 2 eines Küchengeräts 3 mit einem rotierbaren Werkzeughalter 4. Der Entsaftereinsatz 1 weist bei diesem Ausführungsbeispiel ein Adapterelement 5 und ein Entsafterwerkzeug 6 auf. Das Adapterelement 5 ist zum Übertragen eines Drehmoments mittelbar mit dem Werkzeughalter 4 gekoppelt, indem das Adapterelement 5 formschlüssig mit einem an dem Werkzeughalter 4 befestigten Werkzeug 7 zusammenwirkt. Das Werkzeug 7 ist bei diesem Ausführungsbeispiel als Schneid- und Rührwerkzeug mit vier Flügeln 7a ausgebildet. Das Entsafterwerkzeug 6 ist bei diesem Ausführungsbeispiel als Entsafterscheibe 6a ausgebildet.

Der Entsaftereinsatz 1 verfügt ferner über eine erste Trennvorrichtung 8, die bei diesem Ausführungsbeispiel als das Entsafterwerkzeug 6 vollumfänglich umgebendes Sieb ausgebildet ist. Die erste Trennvorrichtung 8 ist topfförmig ausgebildet, so dass sich die Seitenwände 8a der ersten Trennvorrichtung 8 in Richtung eines Deckels 9 des Zubereitungsgefäßes 2 erstrecken. Der Deckel 9 ist formschlüssig mit dem Zubereitungsgefäß 2 verbunden. Bei alternativen Ausgestaltungen - nicht dargestellt - ist vorgesehen, dass die erste Trennvorrichtung 8 als scheibenförmiges Sieb oder Scheibe mit Trennöffnungen unterhalb des Entsafterwerkzeugs 6 ausgebildet ist.

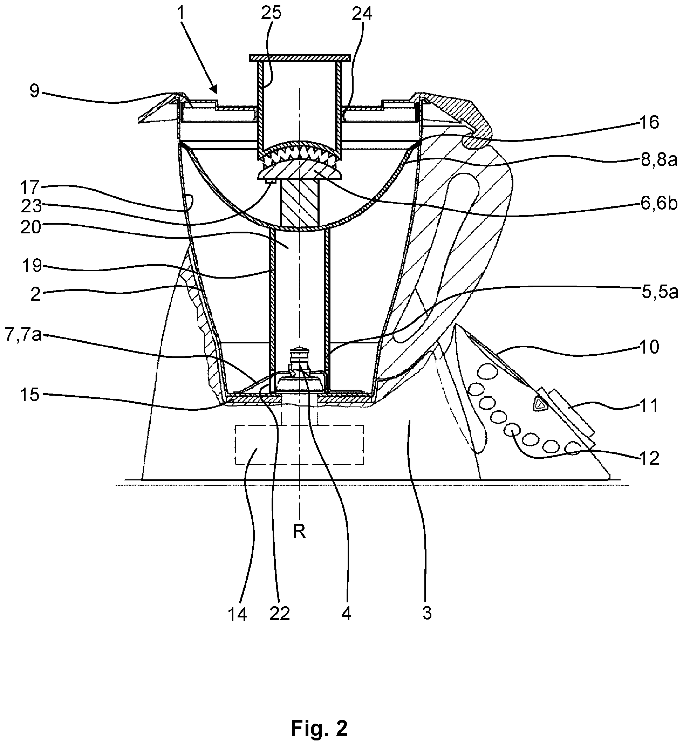

Fig. 2 zeigt ein weiteres Ausführungsbeispiel eines Entsaftereinsatzes 1, eingesetzt in ein Zubereitungsgefäß 2 eines Küchengerätes 3. Das Zubereitungsgefäß 2 weist wiederum einen rotierbaren Werkzeughalter 4 mit einem Werkzeug 7 auf. Bei diesem Ausführungsbeispiel ist das Entsafterwerkzeug 6 als Entsafterkegel 6b für Zitrusfrüchte ausgebildet. Das Entsafterwerkzeug 6 ist drehfest mit dem Adapterelement 5 verbunden, das wiederum formschlüssig mit dem am Werkzeughalter 4 befestigten Werkzeug 7 zusammenwirkt.

Die erste Trennvorrichtung 8 ist wiederum als topfförmiges, das Entsafterwerkzeug 6 vollumfänglich umgebendes Sieb ausgebildet. Die erste Trennvorrichtung 8 weist im oberen Randbereich eine über den gesamten Umfang angeordnete Dichtung 16 auf, die zwischen der ersten Trennvorrichtung 8 und der Innenwand 17 des Zubereitungsgefäßes 2 dichtet. Die Dichtung 16 ist geneigt zur Rotationsachse R angeordnet. Die Dichtung 16 verhindert, dass feste Bestandteile des zu entsaftenden Lebensmittels in den unteren Bereich 2a des Zubereitungsgefäßes 2 gelangen, in dem der Saft gesammelt wird.

Das Küchengerät 3 weist gemäß Fig. 1 und Fig. 2 eine zentrale Anzeigeeinheit 10 mit einem Drück- und Drehknopf 11 sowie einer Mehrzahl von Bedienknöpfen 12 auf. Das Küchengerät 3 weist gemäß Fig. 1 ferner einen Netzanschluss 13 auf, der das Küchengerät 3 mit einer Spannung versorgt. Das Küchengerät 3 weist gemäß Fig. 1 und Fig. 2 ferner einen Motor 14 auf, mit dem der Werkzeughalter 4 des Zubereitungsgefäßes 2 antreibbar ist. Der Werkzeughalter 4 und der Motor 14 sind unterhalb des Zubereitungsgefäßes 2 formschlüssig miteinander gekoppelt - nicht dargestellt. Das Zubereitungsgefäß 2 weist ferner eine elektrische Heizeinrichtung 15 auf, die ebenfalls über das Küchengerät 3 mit einer Spannung versorgt und gesteuert wird. Zwischen Küchengerät 3 und Zubereitungsgefäß 2 ist dazu mindestens eine elektrische Schnittstelle - nicht dargestellt - vorgesehen.

Bei dem Ausführungsbeispiel der Fig. 1 ist entlang einer Rotationsachse R des Entsafterwerkzeugs 1 beabstandet zur ersten Trennvorrichtung 8 eine zweite Trennvorrichtung 18 angeordnet. Die zweite Trennvorrichtung 18 ist etwa auf der Hälfte der Erstreckung eines zwischen dem Adapterelement 5 und der ersten Trennvorrichtung 8 angeordneten Verbindungsschaftes 19 angeordnet. Der Verbindungsschaft 19 ist gemäß Fig. 1 als Welle ausgebildet, die die zweite Trennvorrichtung 18 zentral durchtritt. Die zweite Trennvorrichtung 18 liegt im oberen Bereich des Zubereitungsgefäßes 2 an der Innenfläche 17 des Zubereitungsgefäßes 2 an und ist als Gitter mit Löchern 28 und Schlitzen ausgebildet. Es ist auch vorgesehen, dass die zweite Trennvorrichtung 18 vollständig beabstandet zur Innenfläche 17 des Zubereitungsgefäßes 2 gehalten ist.

Bei alternativen Ausgestaltungen - nicht dargestellt - ist vorgesehen, dass die zweite Trennvorrichtung 18 als scheibenförmiges Sieb oder Scheibe mit Löchern 28 und/oder Schlitzen ausgebildet ist und unterhalb des Entsafterwerkzeugs 6 angeordnet ist.

Der Verbindungsschaft 19 kann relativ zur zweiten Trennvorrichtung 18 rotieren, wird aber von dieser in seiner zentralen Position innerhalb des Zubereitungsgefäßes 2 stabilisiert. Dazu ist der Verbindungsschaft 19 durch eine Ausnehmung 20 in der zweiten Trennvorrichtung 18 hindurchgeführt. Die zweite Trennvorrichtung 18 erfüllt somit die Aufgabe eines Positionierungsmittels zum Abstützen an einer Innenfläche 17 des Zubereitungsgefäßes 2, um den Entsaftereinsatz 1 zu stabilisieren.

Bei alternativen Ausführungsbeispielen - nicht dargestellt - ist vorgesehen, dass auf einen Verbindungsschaft 19 verzichtet wird. Das Entsafterwerkzeug 6 ist dann unmittelbar mit dem Adapterelement 5 verbunden.

Gemäß dem Ausführungsbeispiel der Fig. 1 sind sowohl die erste Trennvorrichtung 8 als auch die zweite Trennvorrichtung 18 topfförmig ausgebildet. Die zweite Trennvorrichtung 18 ist dabei derart angeordnet und ausgebildet, dass sie sich etwas höher als die erste Trennvorrichtung 8 im Zubereitungsgefäß 2 erstreckt. Feste Bestandteile des zu zerkleinernden Lebensmittels, die über den oberen Rand der ersten Trennvorrichtung 8 hinauswandern, werden anschließend von der zweiten Trennvorrichtung 18 zurückgehalten und können mit dieser nach dem Entsaftungsvorgang aus dem Zubereitungsgefäß 2 entnommen werden. Zurück bleibt im unteren Bereich 2a des Zubereitungsgefäßes 2 der Saft.

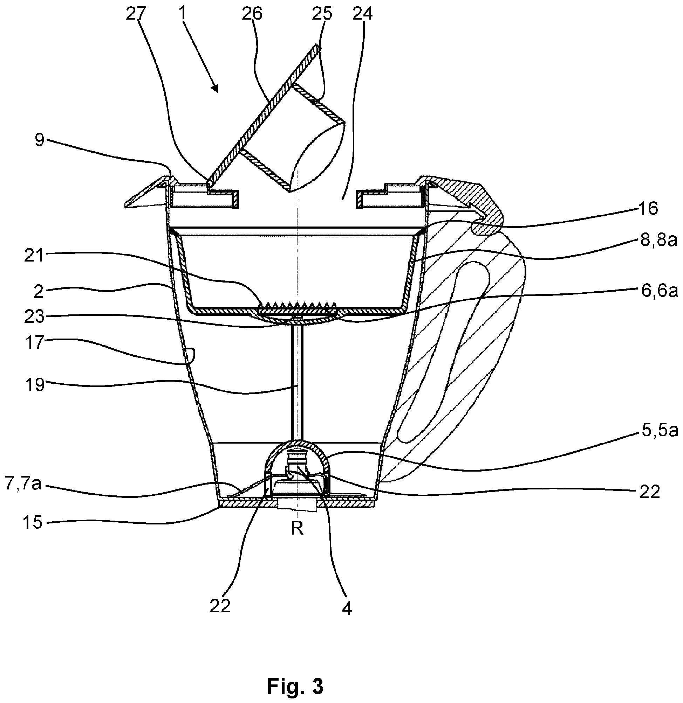

Das Ausführungsbeispiel der Fig. 3 zeigt ein weiteres Ausführungsbeispiel eines Entsaftereinsatzes 1 in einem Zubereitungsgefäß 2. Der Entsaftereinsatz 1 ist im Wesentlichen gemäß dem Ausführungsbeispiel der Fig. 1 ausgebildet, jedoch wird auf die zweite Trennvorrichtung 18 verzichtet, dafür ist eine Dichtung 16 angeordnet.

Bei dem Ausführungsbeispiel der Fig. 3 weist der Deckel 9 einen schwenkbaren Abschnitt 26 auf, an dem das Presswerkzeug 25 angeordnet ist. Bei diesem Ausführungsbeispiel sind der Abschnitt 26 und das Presswerkzeug 25 einstückig ausgebildet und über ein Scharnier 27 am Deckel 9 gelagert. Durch Aufklappen des Abschnitts 26 kann ein Lebensmittel auf das Entsafterwerkzeug 6 aufgelegt werden und anschließend durch Zurückklappen des Abschnitts 26 eine Presskraft auf das Lebensmittel bewirkt werden, damit dieses vom Entsafterwerkzeug 6 zerkleinert und entsaftet wird.

Gemäß Fig. 1 und Fig. 3 ist das Entsafterwerkzeug 6 als Entsafterscheibe 6a mit Schneid- und/oder Reißwerkzeugen 21 ausgebildet, die zum Zerkleinern von harten Lebensmitteln, beispielsweise Möhren oder Fenchel, geeignet sind. Die Schneid- und/oder Reißwerkzeuge 21 sind beispielsweise als aus dem Material des Entsafterwerkzeugs 6 vorgewölbte Schneidvorsprünge ausgebildet. Gemäß Fig. 3 ist die erste Trennvorrichtung 8 zumindest abschnittsweise in einer Ebene mit dem Entsafterwerkzeug 6 angeordnet.

Das Adapterelement 5 weist gemäß den Ausführungsbeispielen der Fig. 1, Fig. 2 und Fig. 3 einen hülsenförmigen Grundkörper 5a sowie eine Mehrzahl sich entlang der Rotationsachse R erstreckende Ausnehmungen 22 auf. Die Ausnehmungen 22 sind so angeordnet, dass sie die Flügel 7a des Werkzeugs 7 formschlüssig umgreifen, und dass eine Kraftübertragung von dem Werkzeug 7 auf das Adapterelement 5 derart erfolgt, dass keine Beschädigung der an den Flügeln 7a vorhandenen Klingenabschnitte erfolgt.

Gemäß Fig. 2 geht das Adapterelement 5 einstückig in den Verbindungsschaft 19 über. Adapterelement 5 und Verbindungsschaft 19 weisen den gleichen Durchmesser auf.

Gemäß Fig. 1, Fig. 2 und Fig. 3 verfügt das jeweilige Entsafterwerkzeug 6 über ein Identifikationsmittel 23, das bei diesen Ausführungsbeispielen als RFID-Chip ausgebildet ist. Das Küchengerät 3 ist dazu ausgebildet, diesen RFID-Chip auszulesen und die Drehzahl des Motors 14 anhand der Art des Entsafterwerkzeugs 6 zu begrenzen oder andere Betriebszustände derart zu modifizieren, dass diese auf das Entsafterwerkzeug 6 abgestimmt sind.

Gemäß den Ausführungsbeispielen der Fig. 1 und Fig. 2 weist der Deckel 9 des Zubereitungsgefäßes 2 eine zentral angeordnete Ausnehmung 24 auf, durch die ein passendes Presswerkzeug 25 einführbar ist, um eine Presskraft auf ein - nicht dargestelltes - Lebensmittel auszuüben, um dieses zum Zwecke des Entsaftens auf das Entsafterwerkzeug 6 zu pressen. Das Presswerkzeug 25 ist gemäß Fig. 1 und 2 als im Wesentlichen zylindrischer Pressstempel ausgebildet.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichen

- 1: Entsaftereinsatz
- 2: Zubereitungsgefäß
- 2a: Unterer Bereich
- 3: Küchengerät
- 4: Werkzeughalter
- 5: Adapterelement
- 5a: Grundkörper
- 6: Entsafterwerkzeug
- 6a: Entsafterscheibe
- 6b: Entsafterkegel
- 7: Werkzeug
- 7a: Flügel
- 8: Erste Trennvorrichtung
- 8a: Seitenwände
- 9: Deckel
- 10: Anzeigeeinheit
- 11: Druck- und Drehknopf
- 12: Bedienknöpfe
- 13: Netzanschluss
- 14: Motor
- 15: Heizeinrichtung
- 16: Dichtung
- 17: Innenwand des Zubereitungsgefäßes
- 18: Zweite Trennvorrichtung
- 19: Verbindungsschaft
- 20: Ausnehmung in der zweiten Trennvorrichtung
- 21: Schneid- und/oder Reißwerkzeug
- 22: Ausnehmung im Adapterelement
- 23: Identifikationsmittel
- 24: Ausnehmung im Deckel
- 25: Presswerkzeug
- 26: Schwenkbarer Abschnitt
- 27: Scharnier
- 28: Löcher

- R: Rotationsachse

## Patentansprüche

1. Zubereitungsgefäß (2) für ein Küchengerät (3), mit mindestens einem rotierbaren Werkzeughalter (4) und einem zumindest teilweise in das Zubereitungsgefäß (2) einbringbaren Entsaftereinsatz (1), wobei der Entsaftereinsatz (1) mindestens ein Adapterelement (5) und mindestens ein Entsafterwerkzeug (6) aufweist, wobei das Adapterelement (5) zum Übertragen eines Drehmoments zumindest mittelbar mit dem Werkzeughalter (4) koppelbar ausgebildet ist, wobei das Entsafterwerkzeug (6) mit dem Adapterelement (5) verbunden ist, so dass eine Rotation des Adapterelements (5) eine Rotation des Entsafterwerkzeugs (6) verursacht,
**dadurch gekennzeichnet, dass**
der Entsaftereinsatz (1) derart ausgebildet ist, dass er vollständig in das Zubereitungsgefäß (2) einbringbar ist, und dass das Zubereitungsgefäß (2) mindestens eine Heizeinrichtung (15) aufweist, mit der in das Zubereitungsgefäß (2) einbringbare Lebensmittel aufheizbar sind.

2. Zubereitungsgefäß (2) nach Anspruch 1,
**dadurch gekennzeichnet, dass**
mindestens eine erste Trennvorrichtung (8) vorhanden ist, und dass mit der ersten Trennvorrichtung (8) Saft eines zu entsaftenden Lebensmittels von festen Bestandteilen bis zu einer vorbestimmte Größe separierbar ist, insbesondere dass die erste Trennvorrichtung (8,8a) als Sieb ausgebildet ist, vorzugsweise dass die erste Trennvorrichtung (8) das Entsafterwerkzeug (6) zumindest teilweise, insbesondere vollständig, umgibt.

3. Zubereitungsgefäß (2) nach Anspruch 2,
**dadurch gekennzeichnet, dass**
die erste Trennvorrichtung (8) mindestens eine zumindest teilweise, insbesondere vollständig, umfänglich umlaufende Dichtung (16) aufweist, insbesondere dass die Dichtung (16) zumindest teilweise eine Neigung gegenüber einer Rotationsachse (R) des Entsafterwerkzeugs (6) aufweist.

4. Zubereitungsgefäß (2) nach einem der Ansprüche 1 bis 3,
**dadurch gekennzeichnet, dass**
mindestens eine zweite Trennvorrichtung (18) vorhanden ist, insbesondere dass die zweite Trennvorrichtung (18) entlang einer Rotationsachse (R) des Entsafterwerkzeugs (6) beabstandet zu der ersten Trennvorrichtung (8) gehalten ist, vorzugsweise dass die zweite Trennvorrichtung (18) die erste Trennvorrichtung (8) zumindest teilweise umgibt.

5. Zubereitungsgefäß (2) nach einem der Ansprüche 1 bis 4,
**dadurch gekennzeichnet, dass**
das Adapterelement (5) und das Entsafterwerkzeug (6) mit einem Verbindungsschaft (19) miteinander verbunden sind, insbesondere dass an dem Verbindungsschaft (19) ein Positionierungsmittel zum zentrierenden Abstützen des Entsaftereinsatzes (1) an einer Innenwand (17) des Zubereitungsgefäßes (2) angeordnet ist.

6. Zubereitungsgefäß (2) nach einem der Ansprüche 1 bis 5,
**dadurch gekennzeichnet, dass**
das Entsafterwerkzeug (6) austauschbar montiert ist, insbesondere werkzeugfrei austauschbar montiert ist.

7. Zubereitungsgefäß (2) nach einem der Ansprüche 1 bis 6,
**dadurch gekennzeichnet, dass**
das Entsafterwerkzeug (6,6a) Schneid- und/oder Reißwerkzeuge (21) zum Zerkleinern von Lebensmitteln aufweist und/oder dass das Entsafterwerkzeug (6) eine Konusinnenfläche oder eine konkave Innenfläche aufweist, und dass an oder in der Konusinnenfläche oder der konkaven Innenfläche Schneid- und/oder Reißwerkzeuge (21) angeordnet sind und/oder dass das Entsafterwerkzeug (6) als Entsafterkegel (6b) für Zitrusfrüchte ausgebildet ist.

8. Zubereitungsgefäß (2) nach einem der Ansprüche 1 bis 7,
**dadurch gekennzeichnet, dass**
das Adapterelement (5) zum form- und/oder kraftschlüssigen Zusammenwirken mit dem Werkzeughalter (4) und/oder einem an dem Werkzeughalter (4) befestigten Werkzeug (7) ausgebildet ist.

9. Zubereitungsgefäß (2) nach einem der Ansprüche 1 bis 8,
**dadurch gekennzeichnet, dass**
das Adapterelement (5) einen hülsenförmigen Grundköper (5a) aufweist, dass der Grundkörper (5a) sich entlang einer Rotationsachse (R) erstreckende Ausnehmungen (22) aufweist, und dass die Ausnehmungen (22) im Montagezustand formschlüssig mit dem Werkzeughalter (4) des Zubereitungsgefäßes (2) und/oder mit einem an dem Werkzeughalter (4) befestigten Werkzeug (7) zusammenwirken.

10. Zubereitungsgefäß (2) nach einem der Ansprüche 1 bis 9,
**dadurch gekennzeichnet, dass**
der Entsaftereinsatz (1) und/oder das Entsafterwerkzeug (6) mindestens ein Identifikationsmittel (23) zur Identifizierung durch ein Küchengerät (3) aufweist, insbesondere dass das Identifikationsmittel (23) zum Empfang und/oder Senden von Funksignalen, insbesondere Nahbereichsfunksignalen, ausgebildet ist.

11. Zubereitungsgefäß nach einem der Ansprüche 1 bis 10,
**dadurch gekennzeichnet, dass**
mindestens ein Deckel (9) und mindestens ein Presswerkzeug (25) umfasst sind, dass der Deckel (9) mindestens eine Ausnehmung (24) aufweist, und dass das Presswerkzeug (25) durch die Ausnehmung (24) im Deckel (9) in das Zubereitungsgefäß (2) einbringbar ist, um eine Presskraft auf ein Lebensmittel im Zusammenwirken mit dem Entsafterwerkzeug (6) aufzubringen und/oder dass das Presswerkzeug (25) zumindest teilweise schwenkbar als Teil des Deckels (9) ausgebildet ist, um eine Presskraft auf ein Lebensmittel im Zusammenwirken mit dem Entsafterwerkzeug (6) aufzubringen.

12. Küchengerät (3) zur Zubereitung von Speisen, mit mindestens einem Zubereitungsgefäß (2) nach einem der Ansprüche 1 bis 11.

13. Küchengerät (3) nach Anspruch 12,
**dadurch gekennzeichnet, dass**
das Küchengerät (3) derart ausgebildet und eingerichtet ist, dass eine vorbestimmte Drehzahl, insbesondere maximale Drehzahl, eines Motors (14) zum Antreiben der Werkzeughalterung (4) des Zubereitungsgefäßes (2) in Abhängigkeit von der Art des verwendeten Entsafterwerkzeugs (6) festlegbar ist und/oder das eine vorbestimmte Drehzahl, insbesondere maximale Drehzahl, eines Motors (14) zum Antreiben der Werkzeughalterung (4) des Zubereitungsgefäßes (2) in Abhängigkeit von Steueranweisungen eines auf dem Küchengerät (3) ablaufenden Zubereitungsprogramms festlegbar ist.

14. Küchengerät (3) nach Anspruch 12 oder 13,
**dadurch gekennzeichnet, dass**
das Küchengerät (3) ein Sende- und/oder Empfangsmittel für Funksignale eines Identifikationsmittels (23), insbesondere eines drahtlosen Identifikationsmittels (23) aufweist, insbesondere dass das Sende- und/oder Empfangsmittel zum Auslesen von RFID-Chips ausgebildet ist.

## Claims

1. Preparation vessel (2) for a kitchen appliance (3), having at least one rotatable tool holder (4) and a juicer insert (1) which can be at least partially inserted into the preparation vessel (2), the juicer insert (1) having at least one adapter element (5) and at least one juicer tool (6), wherein the adapter element (5) is designed to be coupled at least indirectly to the tool holder (4) for transmitting a torque, wherein the juicer tool (6) is connected to the adapter element (5) so that a rotation of the adapter element (5) causes a rotation of the juicer tool (6),
**characterized in that**
the juicer insert (1) is designed in such a way that it can be completely inserted into the preparation vessel (2), and that the preparation vessel (2) has at least one heating device (15) with which foodstuffs that can be inserted into the preparation vessel (2) can be heated.

2. Preparation vessel (2) according to claim 1,
**characterized in that**
at least one first separating device (8) is present, and **in that** the first separating device (8) can be used to separate juice of a foodstuff to be juiced from solid constituents up to a predetermined size, in particular **in that** the first separating device (8, 8a) is designed as a sieve, preferably **in that** the first separating device (8) at least partially, in particular completely, surrounds the juicer tool (6).

3. Preparation vessel (2) according to claim 2,
**characterized in that**
the first separating device (8) has at least one at least partially, in particular completely, circumferential seal (16), in particular **in that** the seal (16) has at least partially an inclination relative to an axis of rotation (R) of the juicer tool (6).

4. Preparation vessel (2) according to any one of claims 1 to 3,
**characterized in that**
at least one second separating device (18) is present, in particular **in that** the second separating device (18) is held at a distance from the first separating device (8) along an axis of rotation (R) of the juicer tool (6), preferably **in that** the second separating device (18) at least partially surrounds the first separating device (8).

5. Preparation vessel (2) according to any one of claims 1 to 4,
**characterized in that**
the adapter element (5) and the juicer tool (6) are connected to one another by a connecting shaft (19), in particular **in that** a positioning means for centering support of the juicer insert (1) on an inner wall (17) of the preparation vessel (2) is arranged on the connecting shaft (19).

6. Preparation vessel (2) according to any one of claims 1 to 5,
**characterized in that**
the juicer tool (6) is mounted interchangeably, in particular is mounted interchangeably without tools.

7. Preparation vessel (2) according to any one of claims 1 to 6,
**characterized in that**
the juicer tool (6, 6a) has cutting and/or tearing tools (21) for chopping food and/or that the juicer tool (6) has a conical inner surface or a concave inner surface, and that cutting and/or tearing tools (21) are arranged on or in the conical inner surface or the concave inner surface and/or that the juicer tool (6) is designed as a juicer cone (6b) for citrus fruits.

8. Preparation vessel (2) according to any one of claims 1 to 7,
**characterized in that**
the adapter element (5) is designed for a form and/or force-locking cooperation with the tool holder (4) and/or a tool (7) attached to the tool holder (4).

9. Preparation vessel (2) according to any one of claims 1 to 8,
**characterized in that**
the adapter element (5) has a sleeve-shaped base body (5a), **in that** the base body (5a) has recesses (22) extending along an axis of rotation (R), and **in that** the recesses (22) interact in a form-fitting manner with the tool holder (4) of the preparation vessel (2) and/or with a tool (7) fastened to the tool holder (4) in the assembled state.

10. Preparation vessel (2) according to any one of claims 1 to 9,
**characterized in that**
the juicer insert (1) and/or the juicer tool (6) has at least one identification means (23) for identification by a kitchen appliance (3), in particular **in that** the identification means (23) is designed to receive and/or transmit radio signals, in particular short-range radio signals.

11. Preparation vessel according to any one of claims 1 to 10,
**characterized in that**
at least one lid (9) and at least one pressing tool (25) are included, **in that** the lid (9) has at least one recess (24), and **in that** the pressing tool (25) can be introduced into the preparation vessel (2) through the recess (24) in the lid (9), in order to apply a pressing force to a foodstuff in cooperation with the juicer tool (6) and/or **in that** the pressing tool (25) is designed to be at least partially pivotable as part of the lid (9) in order to apply a pressing force to a foodstuff in cooperation with the juicer tool (6).

12. Kitchen appliance (3) for preparing food, comprising at least one preparation vessel (2) according to any one of claims 1 to 11.

13. Kitchen appliance (3) according to claim 12,
**characterized in that**
the kitchen appliance (3) is designed and set up in such a way that a predetermined speed, in particular maximum speed, of a motor (14) for driving the tool holder (4) of the preparation vessel (2) can be determined depending on the type of juicer tool (6) used and/or that a predetermined speed, in particular maximum speed, of a motor (14) for driving the tool holder (4) of the preparation vessel (2) can be determined depending on control instructions of a preparation tool (6) running on the kitchen appliance (3), in particular maximum speed, of a motor (14) for driving the tool holder (4) of the preparation vessel (2) can be determined as a function of control instructions of a preparation program running on the kitchen appliance (3).

14. Kitchen appliance (3) according to claim 12 or 13,
**characterized in that**
the kitchen appliance (3) has a transmitting and/or receiving means for radio signals from an identification means (23), in particular a wireless identification means (23), in particular **in that** the transmitting and/or receiving means is designed to read RFID chips.

## Revendications

1. Récipient de préparation (2) pour un appareil de cuisine (3), avec au moins un porte-outil rotatif (4) et un insert d'extracteur de jus (1) pouvant être introduit au moins partiellement dans le récipient de préparation (2), l'insert d'extracteur de jus (1) présentant au moins un élément adaptateur (5) et au moins un outil d'extracteur de jus (6), l'élément adaptateur (5) étant réalisé de manière à pouvoir être couplé au moins indirectement avec le porte-outil (4) pour transmettre un couple de rotation, l'outil d'extracteur de jus (6) étant relié à l'élément adaptateur (5) de telle sorte qu'une rotation de l'élément adaptateur (5) provoque une rotation de l'outil d'extracteur de jus (6),
**caractérisé en ce que**
l'insert d'extracteur de jus (1) est conçu de telle sorte qu'il peut être introduit complètement dans le récipient de préparation (2), et **en ce que** le récipient de préparation (2) présente au moins un dispositif de chauffage (15) avec lequel des aliments pouvant être introduits dans le récipient de préparation (2) peuvent être chauffés.

2. Récipient de préparation (2) selon la revendication 1,
**caractérisé en ce que**
au moins un premier dispositif de séparation (8) est présent, et **en ce que** le premier dispositif de séparation (8) permet de séparer le jus d'un produit alimentaire à extraire du jus des composants solides jusqu'à une taille prédéterminée, en particulier **en ce que** le premier dispositif de séparation (8, 8a) est conçu comme un tamis, de préférence **en ce que** le premier dispositif de séparation (8) entoure au moins partiellement, en particulier complètement, l'outil d'extrateur de jus (6).

3. Récipient de préparation (2) selon la revendication 2,
**caractérisé en ce que**
le premier dispositif de séparation (8) présente au moins un joint d'étanchéité (16) périphérique au moins partiellement, en particulier complètement, en particulier que le joint d'étanchéité (16) présente au moins partiellement une inclinaison par rapport à un axe de rotation (R) de l'outil de d'extracteur de jus (6).

4. Récipient de préparation (2) selon l'une quelconque des revendications 1 à 3,
**caractérisé en ce que**
au moins un deuxième dispositif de séparation (18) est présent, en particulier que le deuxième dispositif de séparation (18) est maintenu à distance du premier dispositif de séparation (8) le long d'un axe de rotation (R) de l'outil d'extracteur de jus (6), de préférence que le deuxième dispositif de séparation (18) entoure au moins partiellement le premier dispositif de séparation (8).

5. Récipient de préparation (2) selon l'une quelconque des revendications 1 à 4,
**caractérisé en ce que**
l'élément adaptateur (5) et l'outil d'extracteur de jus (6) sont reliés l'un à l'autre par une tige de liaison (19), en particulier **en ce que** sur la tige de liaison (19) est disposé un moyen de positionnement pour l'appui centrant de l'insert d'extrateur de jus (1) sur une paroi intérieure (17) du récipient de préparation (2).

6. Récipient de préparation (2) selon l'une quelconque des revendications 1 à 5,
**caractérisé en ce que**
l'outil d'extracteur de jus (6) est monté de manière interchangeable, en particulier est monté de manière interchangeable sans outil.

7. Récipient de préparation (2) selon l'une quelconque des revendications 1 à 6,
**caractérisé en ce que**
l'outil d'extrateur de jus (6, 6a) présente des outils de coupe et/ou de déchirure (21) pour broyer des aliments et/ou **en ce que** l'outil d'extrateur de jus (6) présente une surface intérieure conique ou une surface intérieure concave, et **en ce que** des outils de coupe et/ou de déchirure (21) sont disposés sur ou dans la surface intérieure conique ou la surface intérieure concave et/ou **en ce que** l'outil d'extrateur de jus (6) est conçu comme cône d'extrateur de jus (6b) pour des agrumes.

8. Récipient de préparation (2) selon l'une quelconque des revendications 1 à 7,
**caractérisé en ce que**
l'élément adaptateur (5) est conçu pour coopérer par complémentarité de forme et/ou de force avec le porte-outil (4) et/ou un outil (7) fixé sur le porte-outil (4).

9. Récipient de préparation (2) selon l'une quelconque des revendications 1 à 8,
**caractérisé en ce que**
l'élément adaptateur (5) présente un corps de base (5a) en forme de douille, **en ce que** le corps de base (5a) présente des évidements (22) s'étendant le long d'un axe de rotation (R), et **en ce que** les évidements (22), en état de montage, coopèrent par complémentarité de forme avec le porte-outil (4) du récipient de préparation (2) et/ou avec un outil (7) fixé sur le porte-outil (4).

10. Récipient de préparation (2) selon l'une quelconque des revendications 1 à 9,
**caractérisé en ce que**
l'insert de d'extracteur de jus (1) et/ou l'outil d'extracteur de jus (6) présente au moins un moyen d'identification (23) pour l'identification par un appareil de cuisine (3), en particulier que le moyen d'identification (23) est conçu pour la réception et/ou l'émission de signaux radio, en particulier de signaux radio à courte portée.

11. Récipient de préparation selon l'une quelconque des revendications 1 à 10,
**caractérisé en ce que**
au moins un couvercle (9) et au moins un outil de pressage (25) sont compris, **en ce que** le couvercle (9) présente au moins un évidement (24), et **en ce que** l'outil de pressage (25) peut être introduit dans le récipient de préparation (2) à travers l'évidement (24) dans le couvercle (9), pour appliquer une force de pressage sur un aliment en coopération avec l'outil d'extrateur de jus (6) et/ou **en ce que** l'outil de pressage (25) est conçu de manière à pouvoir pivoter au moins partiellement en tant que partie du couvercle (9), pour appliquer une force de pressage sur un aliment en coopération avec l'outil d'extrateur de jus (6).

12. Appareil de cuisine (3) pour la préparation d'aliments, comprenant au moins un récipient de préparation (2) selon l'une des revendications 1 à 11.

13. Appareil de cuisine (3) selon la revendication 12,
**caractérisé en ce que**
l'appareil de cuisine (3) est conçu et aménagé de telle sorte qu'une vitesse de rotation prédéterminée, en particulier la vitesse de rotation maximale, d'un moteur (14) pour l'entraînement du porte-outil (4) du récipient de préparation (2) peut être fixée en fonction du type d'outil d'extracteur de jus (6) utilisé et/ou qu'une vitesse de rotation prédéterminée, en particulier la vitesse de rotation maximale, d'un moteur (14) pour l'entraînement du porte-outil (4) du récipient de préparation (2) peut être fixée en fonction d'instructions de commande d'un programme de préparation se déroulant sur l'appareil de cuisine (3).

14. Appareil de cuisine (3) selon la revendication 12 ou 13,
**caractérisé en ce que**
l'appareil de cuisine (3) présente un moyen d'émission et/ou de réception pour des signaux radio d'un moyen d'identification (23), en particulier d'un moyen d'identification sans fil (23), en particulier **en ce que** le moyen d'émission et/ou de réception est conçu pour lire des puces RFID.
